Europäisches Patentamt

European Patent Office

Office européen des brevets

(19)

(11) Numéro de publication : **0 478 429 B1**

## (12) FASCICULE DE BREVET EUROPEEN

(45) Date de publication du fascicule du brevet :
09.08.95 Bulletin 95/32

(51) Int. Cl.⁶ : **G05D 1/08**, B64C 27/54,
G05D 3/12

(21) Numéro de dépôt : **91402519.2**

(22) Date de dépôt : **23.09.91**

(54) **Verin asservi en position.**

(30) Priorité : **24.09.90 FR 9011739**

(43) Date de publication de la demande :
**01.04.92 Bulletin 92/14**

(45) Mention de la délivrance du brevet :
**09.08.95 Bulletin 95/32**

(84) Etats contractants désignés :
**DE FR GB IT**

(56) Documents cités :
**EP-A- 0 021 968
EP-A- 0 360 099
GB-A- 2 132 385
US-A- 4 492 907**

(73) Titulaire : **SOCIETE DE FABRICATION
D'INSTRUMENTS DE MESURE (S.F.I.M.)
13, avenue Marcel Ramolfo-Garnier
F-91344 Massy Cédex (FR)**

(72) Inventeur : **Delattre, Jacques
7Bis rue du Petit Frenneville
F-91720 Valpuiseaux (FR)**
Inventeur : **Gouze, Philippe
6, bis route de Corbeil
F-91360 Villemoisson (FR)**

(74) Mandataire : **Schrimpf, Robert et al
Cabinet Regimbeau
26, Avenue Kléber
F-75116 Paris (FR)**

**Description**

La présente invention concerne un vérin asservi en position, comprenant un moteur alimenté par un circuit d'alimentation commandé, au moins, par un signal d'erreur, une cinématique de réduction transformant, sur une course donnée, le mouvement rotatif dudit moteur en mouvement linéaire, un capteur de sortie donnant une indication de position du vérin, et un circuit de calcul du signal d'erreur comparant une position commandée du vérin à une position calculée, comme décrit par exemple dans le document US-A-4 492 907.

L'invention s'applique tout particulièrement à la commande de vol, en pilotage automatique, d'un aéronef, notamment un hélicoptère, pour asservir la position de l'appareil dans l'espace.

On connaît de l'état de la technique un vérin asservi en position conforme au préambule dans lequel le moteur est un moteur à courant continu à collecteur qui entraîne une cinématique de réduction comprenant un limiteur de couple et un réducteur vis-écrou. Le capteur de sortie est un potentiomètre double lié à la tige de sortie qui délivre un signal proportionnel à son élongation, représentatif de la position réelle calculée du vérin. Ce signal est appliqué au circuit de calcul du signal d'erreur qui, si la position calculée du vérin diffère de la position commandée, fournit un signal d'erreur non nul à un amplificateur de puissance qui alimente alors le moteur jusqu'à ce que le signal d'erreur s'annule, la position calculée du vérin coïncidant alors avec la valeur commandée.

D'une manière générale, les circuits d'asservissement et de puissance du vérin décrit ci-dessus sont par exemple situés dans le calculateur du pilote automatique et, en tout état de cause, à l'extérieur du boîtier contenant les organes mécaniques du vérin.

Le vérin connu de l'état de la technique présente un certain nombre d'inconvénients. En effet, au niveau du vérin lui-même, le moteur à collecteur et le potentiomètre sont des composants à usure par frottement de contacts électriques (balais du moteur et curseur du potentiomètre) qui limitent la durée de vie du vérin et nécessitent de fréquentes déposes destinées à remplacer les pièces usées. De même le limiteur de couple, utile lors des mises en butée à vitesse maximale, est également un composant à usure par friction. D'autre part, au niveau de l'asservissement, le circuit de calcul du signal d'erreur, ou amplificateur d'asservissement, est éloigné du vérin, ce qui implique un nombre de fils important entre l'amplificateur et le vérin (2 fils moteur et 3 fils par potentiomètre). De plus, le courant absorbé par le moteur et fourni par l'amplificateur de puissance circulant dans des fils de grande longueur risque de créer des parasites par rayonnement dans les câblages et équipements situes à proximité.

Aussi, un problème technique à résoudre par l'objet de la présente invention est de réaliser un vérin asservi en position conforme au préambule, qui permettrait d'éliminer les composants à usure par frottement de façon à augmenter la durée de vie du vérin et à en limiter les opérations de maintenance.

Un autre problème technique à résoudre est de réduire le nombre de câbles de liaison entre le calculateur de pilote automatique et le vérin.

La solution au premier problème technique posé consiste, selon la présente invention, en ce que ledit capteur de sortie fournit un signal binaire de position prenant deux valeurs différentes selon la position du vérin par rapport au point milieu de la course dudit vérin, ledit signal binaire de position étant appliqué à un circuit logique de mise sous tension qui, lorsque le vérin reçoit un ordre d'activation, commute l'entrée d'un circuit d'alimentation du moteur sur le capteur de sortie de façon à appliquer le signal binaire de position audit circuit d'alimentation du moteur jusqu'au changement de valeur du signal binaire de position, le circuit logique de mise sous tension commutant alors l'entrée du circuit d'alimentation du moteur sur la sortie du circuit de calcul du signal d'erreur, la position calculée du vérin étant fournie par un circuit recevant un signal de position moteur provenant d'au moins un capteur, dit capteur moteur, situé sur le moteur.

Ainsi, les causes d'usure par frottement sont éliminées. En effet, les potentiomètres de recopie de position du vérin sont supprimés et sont remplacés par un capteur de sortie sans contact (signal binaire tout ou rien) donnant la position du milieu de la course du vérin. D'autre part, le limiteur de couple est supprimé, la limitation de couple étant réalisée par l'électronique de commande du moteur. Enfin, on peut utiliser un moteur sans balais. En particulier, il est prévu que ledit moteur est un moteur autosynchrone dont le circuit d'alimentation comprend un modulateur de largeur d'impulsion transformant une tension d'entrée en impulsions de rapport cyclique variable, proportionnel à ladite tension d'entrée, un circuit logique de commande du moteur fournissant un ordre d'alimentation des phases du moteur en fonction de la position du rotor par rapport au stator donnée par le signal de position-moteur et du signe de la tension d'entrée, l'alimentation des phases du moteur étant modulée par le signal issu dudit modulateur de largeur d'impulsion, et, un module de puissance assurant l'interface entre le circuit logique de commande et le moteur.

Enfin, il est possible d'intégrer dans le vérin les divers circuits d'asservissement et d'alimentation du moteur. De ce fait, la liaison entre le calculateur du pilote automatique et le vérin se résume à un nombre limité de fils. La puissance nécessaire au mouvement du vérin est prélevée directement sur le réseau de bord de l'hélicoptère, par exemple.

La description qui va suivre en regard des dessins annexés, donnés à titre d'exemples non limitatifs, fera bien comprendre en quoi consiste l'invention et comment elle peut être réalisée.

La Figure 1 est un schéma synoptique d'un vérin asservi en position selon l'invention.

La Figure 2 est un schéma synoptique de l'électronique de commande du vérin de la Figure 1.

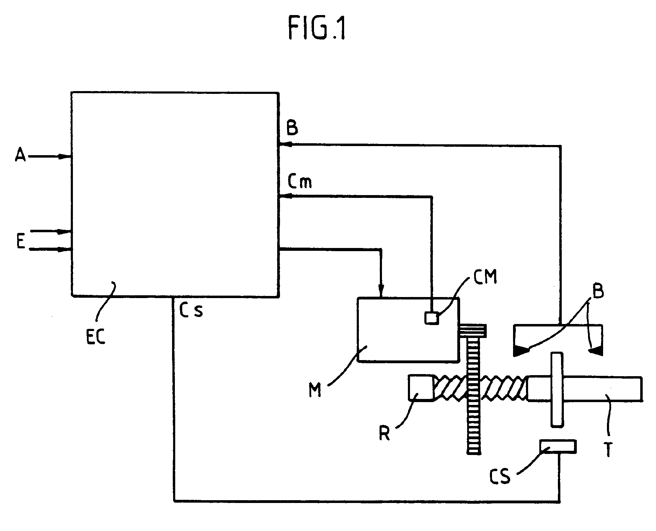

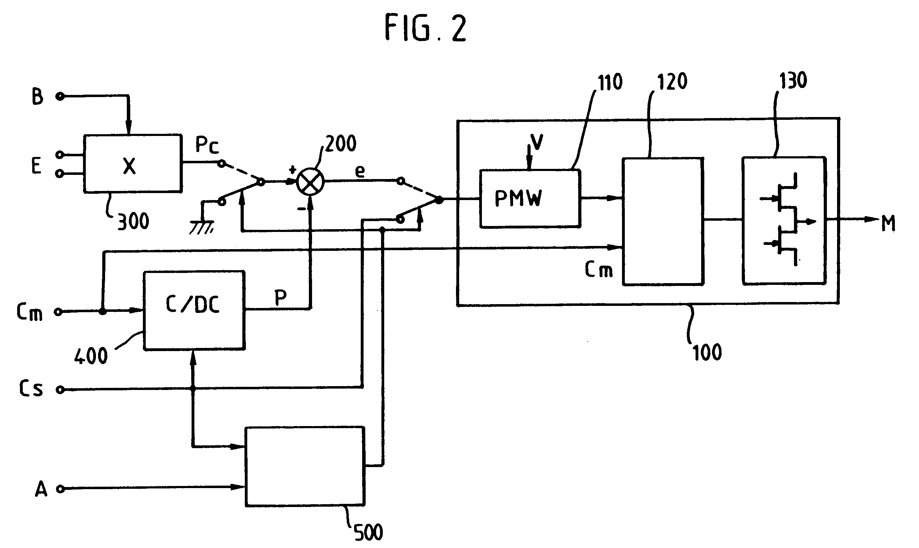

Le schéma synoptique de la Figure 1 montre un vérin asservi en position, par exemple pour commande de vol d'hélicoptère, comprenant un moteur M autosynchrone sans balais alimenté par un circuit 100 d'alimentation montré sur le synoptique de la Figure 2. Le circuit d'alimentation du moteur est commandé, notamment, par un signal d'erreur e qui, de façon connue, est fourni par un circuit 200 de calcul, amplificateur différentiel par exemple, à partir de la comparaison entre une position commandée $P_c$ du vérin et une position calculée P :

$$e = k(P - P_c)$$

Comme le montre la Figure 1, le vérin comprend en outre une cinématique R de réduction, un réducteur vis-écrou par exemple, transformant le mouvement rotatif du moteur M en mouvement linéaire sur une course limitée par des butées B. Au besoin, une tige T de sortie transmet ledit mouvement linéaire à la commande de vol, non représentée sur la Figure 1.

Un capteur de sortie CS, sans contact, type capteur à effet HALL fournit un signal binaire Cs de position prenant deux valeurs différentes, 1 ou 0, ou + ou -, selon la position du vérin par rapport au point milieu de la course totale. Conformément à la Figure 2, à la mise sous tension et après réception d'un signal d'activation A, le signal binaire Cs de position est appliqué à un circuit logique 500 de mise sous tension qui commute l'entrée du circuit 100 d'alimentation du moteur sur le capteur de sortie CS de façon à appliquer le signal binaire Cs de position au circuit 100 d'alimentation, et ainsi de recentrer le vérin, jusqu'à ce que ledit signal binaire de position change de valeur. Ce changement d'état est détecté par le circuit logique 500 de mise sous tension qui commute alors l'entrée du circuit 100 d'alimentation du moteur sur la sortie du circuit 200 de calcul du signal d'erreur e. A partir de cet instant, le vérin est piloté par le signal d'entrée E. Ce signal d'entrée E est proportionnel par exemple à la différence $\theta - \theta_R$ entre l'assiette réelle $\theta$, de roulis ou de tangage, déterminée par l'hélicopètre et une assiette de référence $\theta_R$ sur laquelle est réglé le pilote automatique. Le signal d'entrée est adapté de façon à ce que la course maximale du vérin soit toujours obtenue par un même signal, quelle que soit l'autorité L du vérin.

La position commandée $P_c$ du vérin est fournie par un circuit 300 d'adaptation d'entrée comme le produit du signal d'entrée E exprimé en pourcentage de l'autorité du vérin, par l'autorité L du vérin déterminée par les butées B limitant la course de la tige T de sortie :

$$P_c = ExL$$

On peut voir sur la Figure 1 que le moteur autosynchrone M est muni d'au moins un capteur, capteur sans contact type à effet HALL, dit capteur moteur CM, qui fournit des informations Cm sur la position du rotor du moteur. Etant donné que le mouvement de la tige T de sortie est lié directement à la rotation du moteur M par le réducteur R sans friction, les informations Cm issues du (des) capteur(s) moteur CM sont utilisées pour commander un circuit 400 donnant la position calculée P du vérin. Dans l'exemple de la Figure 2, ce circuit est un compteur/décompteur qui, de façon à tenir compte des dérives éventuelles, est réinitialisé à chaque changement de valeurs du signal binaire Cs de position.

Comme le montre la Figure 2, le circuit 100 d'alimentation du moteur M comprend un modulateur 110 de largeur d'impulsion (connu sous le nom de PWM) qui transforme une tension d'entrée, signal d'erreur e ou signal binaire Cs de position, en impulsions de rapport cyclique variable, proportionnel à ladite tension d'entrée. Ce circuit 110 fournit également un signal donnant le sens de rotation à appliquer au moteur en fonction du signe de e ou de Cs. Les impulsions provenant du circuit 110 sont ensuite transmises à un circuit logique 120 de commande du moteur dont la principale fonction est de déterminer l'ordre d'alimentation des phases du moteur autosynchrone en fonction de la position de son rotor par rapport à son stator et du signe de la tension d'entrée. De plus, l'alimentation des phases du moteur M est modulée par le signal issu du modulateur 110 de largeur d'impulsion. Enfin, un module 130 de puissance assure l'interface entre le circuit logique 120 de commande et le moteur M. Les signaux provenant de la logique de commande sont répartis sur les voies correspondant chacune à une phase du moteur de manière à le piloter.

Afin de ramener à 3 les fils reliant le calculateur de pilotage automatique au vérin, le circuit logique 500 de mise sous tension, le circuit 100 d'alimentation du moteur, le circuit 200 de calcul du signal d'erreur, le compteur/décompteur 400 et le circuit 300 d'adaptation d'entrée, constituant l'ensemble de l'électronique de commande EC, sont intégrés dans un boîtier contenant le vérin.

L'invention a été décrite ci-dessus en référence à une commande de vol d'hélicoptère, mais il est bien entendu qu'elle s'applique également à tout type de vérin asservi en position.

**Revendications**

1. Vérin asservi en position, comprenant un moteur (M) alimenté par un circuit (100) d'alimentation commandé, au moins, par un signal d'erreur (e), une cinématique (R) de réduction transformant, sur une course donnée, le mouvement rotatif dudit moteur (M) en mouvement linéaire, un capteur de sortie (CS) donnant une indication de position du vérin, et un circuit de calcul du signal d'erreur comparant une position commandée (Pc) du vérin à une position calculée (P), caractérisé en ce que ledit capteur de sortie (CS) fournit un signal binaire (Cs) de position prenant deux valeurs différentes selon la position du vérin par rapport au point milieu de la course dudit vérin, ledit signal binaire (Cs) de position étant appliqué à un circuit logique (500) de mise sous tension qui, lorsque le vérin reçoit un ordre d'activation (A), commute l'entrée du circuit (100) d'alimentation du moteur (M) sur le capteur de sortie (CS) de façon à appliquer le signal binaire (Cs) de position audit circuit (100) d'alimentation du moteur jusqu'au changement de valeur du signal binaire de position, le circuit logique (500) de mise sous tension commutant alors l'entrée du circuit (100) d'alimentation du moteur sur la sortie du circuit (200) de calcul du signal d'erreur (e), la position calculée (Pc) du vérin étant fournie par un circuit (400) recevant un signal (Cm) de position-moteur provenant d'au moins un capteur, dit capteur moteur (CM), situé sur le moteur (M).

2. Vérin selon la revendication 1, caractérisé en ce que ledit moteur est un moteur (M) autosynchrone dont le circuit (100) d'alimentation comprend un modulateur (110) de largeur d'impulsion transformant une tension d'entrée (e, Cs) en impulsions de rapport cyclique variable, proportionnel à ladite tension d'entrée un circuit logique (120) de commande du moteur (M) fournissant un ordre d'alimentation des phases du moteur en fonction de la position du rotor par rapport au stator donnée par le signal (Cm) de position moteur et du signe de la tension d'entrée, l'alimentation des phases du moteur étant modulée par le signal issu dudit modulateur (110) de largeur d'impulsion, et un module (130) de puissance assurant l'interface entre le circuit logique (120) de commande et le moteur (M).

3. Vérin selon l'une des revendications 1 ou 2, caractérisé en ce que ledit circuit (400) fournissant la position calculée (P) du vérin est un compteur/décompteur qui est réinitialisé à chaque changement de valeur du signal binaire (Cs) de position.

4. Vérin selon l'une quelconque des revendications 1 à 3, caractérisé en ce qu'un circuit (300) d'adaptation d'entrée fournit ladite position commandée (Pc) du vérin comme le produit d'un signal d'entrée (E) exprimé en pourcentage de l'autorité du vérin par l'autorité (L) du vérin déterminée par deux butées (B) limitant la course dudit vérin.

5. Vérin selon l'ensemble des revendications 1 à 4, caractérisé en ce qu'au moins un des circuits suivants : circuit logique (500) de mise sous tension, circuit (100) d'alimentation du moteur, circuit (200) de calcul du signal d'erreur, compteur/décompteur (400) et circuit (300) d'adaptation d'entrée, est intégré à un boîtier contenant le vérin.

**Patentansprüche**

1. Antriebsvorrichtung mit Servopositionierung, umfassend einen Motor (M), der von einer Versorgungsschaltung (100) gespeist wird, die durch mindestens ein Fehlersignal (e) gesteuert wird, ein Reduktionsgetriebe (R), welches die Drehbewegung des Motors (M) in eine lineare Bewegung längs einer vorgegebenen Wegstrecke umsetzt, einen Ausgangssensor (CS), der eine Angabe der Position der Antriebsvorrichtung liefert, und eine Rechenschaltung für das Fehlersignal, welche die angesteuerte Position (Pc) der Antriebsvorrichtung mit einer berechneten Position (P) vergleicht, dadurch **gekennzeichnet**, daß der Ausgangssensor (CS) ein binäres Positionssignal (Cs) liefert, welches abhängig von der Position des Antriebs relativ zu dem Mittelpunkt der Bahn dieses Antriebs zwei unterschiedliche Werte annimmt, wobei das binäre Positionssignal (Cs) an eine logische Schaltung (500) zum Unter-Spannung-Setzen angelegt wird, die dann, wenn der Antrieb einen Aktivierungsbefehl (A) enthält, den Eingang der Versorgungsschaltung (100) des Motors (M) über den Ausgangssensor (CS) umschaltet, indem sie das binäre Positionssignal (Cs) an die Versorgungsschaltung (100) des Motors anlegt, bis sich der Wert des binären Positionsignals ändert, wobei die logische Schaltung (500) zum Unter-Spannung-Setzen also den Eingang der Versorgungsschaltung (100) des Motors auf den Ausgang der Rechenschaltung (200) für das Fehlersignal (e) schaltet, und die berechnete Position (Pc) des Antriebs von einer Schaltung (400) geliefert wird, die ein Motorpositionssignal (Cm) empfängt, das von mindestens einem Sensor bereitgestellt wird, welcher als "Motorsensor" (CM) bezeichnet ist und am Motor (M) angeordnet ist.

2. Antriebsvorrichtung nach Anspruch 1, dadurch **gekennzeichnet**, daß der Motor ein Asynchronmotor (M) ist, dessen Versorgungsschaltung (100) einen Pulsbreitenmodulator (110) aufweist, der eine Eingangsspannung (e, Cs) in Impulse mit einem zyklischen variablen Verhältnis umsetzt, das proportional zu der Eingangsspannung der logischen Schaltung (120) zur Ansteuerung des Motors (M) ist, welche eine Versorgungsfolge für die Phasen des Motors als Funktion der Position des Rotors relativ zum Stator liefert, wobei die Position durch das Motorpositionssignal (Cm) und das Vorzeichen der Eingangsspannung gegeben ist, wobei die Versorgung der Phasen des Motors durch das von dem Pulsbreitenmodulator (110) ausgegebene Signal moduliert wird, und ein Leistungsmodul (130) aufweist, das die Verbindung zwischen der logischen Steuerschaltung (120) und dem Motor (M) gewährleistet.

3. Antriebsvorrichtung nach einem der Ansprüche 1 oder 2, dadurch **gekennzeichnet**, daß die Schaltung (400), welche die berechnete Position (P) der Antriebsvorrichtung liefert, ein Aufwärts-/Abwärts-Zähler ist, der bei jeder Änderung des Wertes des binären Positionssignales (Cs) zurückgesetzt wird.

4. Antriebsvorrichtung nach einem der Ansprüche 1 bis 3, dadurch **gekennzeichnet**, daß eine Eingangsanpassungsschaltung (300) die angesteuerte Position (Pc) der Antriebsvorrichtung als das Produkt eines Eingangssignals (E) in Prozent der maximalen Wegstrecke ("Autorität") des Antriebs mal der maximalen Wegstrecke (L) des Antriebs liefert, welche durch zwei Anschläge (B) bestimmt wird, die die Wegstrecke der Antriebsvorrichtung begrenzen.

5. Antriebsvorrichtung gemäß der Gesamtheit der Ansprüche 1 bis 4, dadurch **gekennzeichnet**, daß mindestens eine der folgenden Schaltungen in einem die Antriebsvorrichtung enthaltenden Gehäuse integriert ist: die Logikschaltung (500) zum Unter-Spannung-Setzen, die Versorgungsschaltung (100) für den Motor, die Rechenschaltung (200) für das Fehlersignal, der Aufwärts-/Abwärts-Zähler (400) und die Eingangsanpassungsschaltung (300).

**Claims**

1. Position-controlled actuator comprising a motor (M) adapted to be supplied with power by a power supply circuit (100) controlled at least by an error signal (e), a speed reducer (R) converting rotary movement of said motor (M) into linear movement over a given travel, an output sensor (CS) indicating the position of the actuator and an error signal computation circuit comparing a commanded position (Pc) of the actuator to a calculated position (P), characterised in that said output sensor (CS) supplies a binary position signal (Cs) taking two different values according to the position of the actuator relative to the mid-travel position of said actuator, said binary position signal (Cs) being applied to a power up logic circuit (500) which, when said actuator receives an activation instruction (A), switches the input of the motor power supply circuit (100) to said output sensor (CS) so as to apply the binary position signal (Cs) to said motor power supply circuit (100) until the value of the binary position signal changes, whereupon the power up logic circuit (500) switches the input of the motor power supply circuit (100) to the output of the error signal computation circuit (200), the calculated position (Pc) of the actuator being supplied by a circuit (400) receiving a motor position signal (Cm) from at least one motor sensor (CM) on the motor (M).

2. Actuator according to claim 1 characterised in that said motor is a synchronous motor (M) whose power supply circuit (100) comprises a pulse width modulator (110) converting an input voltage (e, Cs) into pulses with a duty cycle proportional to said input voltage, a motor control logic circuit (120) supplying a motor phase power supply instruction conditioned by the position of the rotor relative to the stator given by the motor position signal (Cm) and the sign of the input voltage, the motor phase power supply being modulated by the signal from said pulse width modulator (110), and a power module (130) providing an interface between the control logic circuit (120) and the motor (M).

3. Actuator according to claim 1 or claim 2 characterised in that said circuit (400) supplying the calculated position (P) of the actuator is a counter/downcounter which is reset whenever the binary position signal (Cs) value changes.

4. Actuator according to any one of claims 1 to 3 characterised in that an input matching circuit (300) supplies said commanded position (Pc) of the actuator as the product of an input signal (E) expressed as a percentage of the actuator authority by the actuator authority (L) as determined by two abutments (B) delimiting the travel of said actuator.

5. Actuator according to any one of claims 1 to 4 characterised in that at least the power up logic circuit (500) or the motor power supply circuit (100) or the error signal computation circuit (200) or the counter/downcounter (400) or the input matching circuit (300) is integrated into a casing containing the actuator.

FIG.1

# FIG. 2